(19)

Europäisches
Patentamt
European
Patent Office
Office européen
des brevets

(11) **EP 4 417 716 A1**

(12) **EUROPEAN PATENT APPLICATION**
published in accordance with Art. 153(4) EPC

(43) Date of publication:
**21.08.2024 Bulletin 2024/34**

(21) Application number: **22881064.4**

(22) Date of filing: **12.10.2022**

(51) International Patent Classification (IPC):
*C21D 8/12* (2006.01)   *C21D 9/00* (2006.01)
*C22C 38/00* (2006.01)   *C22C 38/14* (2006.01)
*C22C 38/60* (2006.01)   *H01F 41/02* (2006.01)
*H01F 1/147* (2006.01)   *C23C 22/00* (2006.01)

(52) Cooperative Patent Classification (CPC):
**C21D 8/12; C21D 9/00; C22C 38/00; C22C 38/14;
C22C 38/60; C23C 22/00; H01F 1/147; H01F 41/02**

(86) International application number:
**PCT/JP2022/038106**

(87) International publication number:
**WO 2023/063369 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2021 JP 2021168280**

(71) Applicant: NIPPON STEEL CORPORATION
Chiyoda-ku
**Tokyo 100-8071 (JP)**

(72) Inventors:
• **NATORI, Yoshiaki**
**Tokyo 100-8071 (JP)**
• **TAKEDA, Kazutoshi**
**Tokyo 100-8071 (JP)**
• **YASHIKI, Hiroyoshi**
**Tokyo 100-8071 (JP)**
• **FUKUCHI, Minako**
**Tokyo 100-8071 (JP)**

(74) Representative: **Vossius & Partner
Patentanwälte Rechtsanwälte mbB
Siebertstrasse 3
81675 München (DE)**

(54) **NON-ORIENTED ELECTROMAGNETIC STEEL SHEET, IRON CORE AND MOTOR CORE, AND METHOD FOR MANUFACTURING IRON CORE AND MOTOR CORE**

(57)   Provided is a non-oriented electrical steel sheet including a base steel sheet and an insulating coating film formed on a surface of the base steel sheet, wherein the base steel sheet has a chemical composition containing, in mass%, C: 0.0030% or less, Si: 3.2 to 6.5%, Mn: 0.05 to 3.5%, P: 0.005 to 0.10%, S: 0.0030% or less, Al: 1.0% of less, Ti: 0.0030% or less, B: 0.0010% or less, Mo: 0.030% or less, V: 0.0010% or less, Ca: 0 to 0.0050%, Mg: 0 to 0.0050%, and REM: 0 to 0.0050%, with a balance being Fe and impurities, and satisfying [S-5/3×Mg-4/5×Ca-1/4×REM<0.0005], and the insulating coating film has a chemical composition satisfying [[M]-[C]+1/2×[O]>0].

FIGURE 1

EP 4 417 716 A1

**Description**

TECHNICAL FIELD

The present invention relates to a non-oriented electrical steel sheet, iron core and motor core, and method for manufacturing iron core and motor core.

BACKGROUND ART

In recent years, global environmental issues have been attracting attention, and the demand for energy-saving efforts has been increasing further. In particular, there is a strong demand for higher efficiency in electrical equipment. For this reason, there is a growing demand for improved magnetic properties in non-oriented electrical steel sheets, which are widely used as iron core materials for motors, generators, and the like.

This tendency is noticeable in drive motors for electric and hybrid vehicles, and motors for compressors of air conditioners. Therefore, further improvement of magnetic properties, especially lower iron loss, is required for non-oriented electrical steel sheets for motor cores of these various motors.

Conventionally, Si content has been increased and sulfide content has been reduced to achieve low iron loss (see, for example, Patent Document 1, etc.). Increasing the Si content has an effect of increasing intrinsic resistance and decreasing eddy current loss. In addition, reducing sulfides can lower hysteresis loss by promoting coarse grain formation by reducing precipitates that inhibit grain boundary migration. In addition, attempts have been made to improve magnetic properties by stress relief annealing to remove punching strain.

LIST OF PRIOR ART DOCUMENTS

PATENT DOCUMENT

Patent Document 1: JP2000-54085A

SUMMARY OF INVENTION

TECHNICAL PROBLEM

However, when the present inventors simultaneously implemented three measures for magnetic properties improvement: high Si content, sulfide reduction, and stress relief annealing, the amount of iron loss improvement was lower than expected.

The present invention has been made to solve such problems and an objective of the present invention is to stably obtain non-oriented electrical steel sheets with low iron loss.

SOLUTION TO PROBLEM

The gist of the present invention includes the following non-oriented electrical steel sheets, iron cores and motor cores, and methods for manufacturing the iron cores and motor cores.

(1) A non-oriented electrical steel sheet including:

a base metal steel sheet, and an insulating coating film formed on a surface of the base metal steel sheet,
wherein the chemical composition of the base metal steel sheet contains, by mass%,
C: 0.0030% or less,
Si: 3.2 to 6.5%,
Mn: 0.05 to 3.5%,
P: 0.005 to 0.10%,
S: 0.0030% or less,
Al: 1.0% or less,
Ti: 0.0030% or less,
B: 0.0010% or less,
Mo: 0.030% or less,
V: 0.0010% or less,

Ca: 0 to 0.0050%,
Mg: 0 to 0.0050%, and
REM: 0 to 0.0050%,
with a balance being Fe and impurities, and
satisfies Formula (i) below, and
wherein the chemical composition of the insulating coating film satisfies Formula (ii) below.

$$S - 5/3 \times Mg - 4/5 \times Ca - 1/4 \times REM < 0.0005 \ldots. \text{(i)}$$

$$[M] - [C] + 1/2 \times [O] > 0 \ldots. \text{(ii)}$$

Here, the element symbols in Formula (i) above represent the content (mass%) of each element in the base metal steel sheet, [M] in Formula (ii) above means the total atomic concentration (at%) of one or more elements selected from Mn, Ti, Zr, Hf, Ta, Nb, V, Mo and Zn contained in the insulating coating film, and [C] and [O] mean the atomic concentration (at%) of C and O contained in the insulating coating film, respectively.

(2) The non-oriented electrical steel sheet described in (1) above,
wherein the chemical composition of the base metal steel sheet contains, in lieu of a part of the Fe, by mass%, one or more selected from:

Sn: 0.10% or less,
Sb: 0.10% or less,
Ni: 0.10% or less,
Cr: 0.10% or less, and
Cu: 0.10% or less.

(3) The non-oriented electrical steel sheet described in (1) or (2) above,
wherein the base metal steel sheet has a thickness of less than 0.30 mm and the insulating coating film has a thickness of 1.0 μm or less.
(4) The non-oriented electrical steel sheet described in any one of (1) to (3) above,
wherein the steel sheet is used for applications in which stress relief annealing is performed in a temperature range of 750 to 900°C after being punched into a predetermined shape and laminated.
(5) The non-oriented electrical steel sheet described in any one of (1) to (4) above,
wherein after laminating five non-oriented electrical steel sheets and annealing at 800°C for two hours in an atmosphere of 100% $N_2$ and a dew point of -30°C, when the C concentration in the base steel of one of the five laminated non-oriented electrical steel sheets in the center of a laminating direction is measured, the increment of C concentration, which is the amount of increase from the C concentration in the base metal steel sheet of the non-oriented electrical steel sheet before annealing, is 1 ppm or less.
(6) The non-oriented electrical steel sheet described in any one of (1) to (5) above,
wherein after laminating five non-oriented electrical steel sheets and annealing at 800°C for two hours in an atmosphere of 100% $N_2$ and a dew point of -30°C, the iron loss $W_{10/400}$ measured using one of the five laminated non-oriented electrical steel sheets in the center of the laminating direction is less than 11.5 W/kg.
(7) The non-oriented electrical steel sheet described in any one of (1) to (6) above,
wherein after laminating five non-oriented electrical steel sheets and annealing at 800°C for two hours in an atmosphere of 100% $N_2$ and a dew point of -30°C, an amount of carbides contained in the insulating coating film in one of the five laminated non-oriented electrical steel sheets in the center of the laminating direction is 10 mg/m$^2$ or more in terms of carbon amount.
(8) An iron core including the non-oriented electrical steel sheet described in any one of (1) to (7) above.
(9) A method for manufacturing an iron core including a process of laminating the non-oriented electrical steel sheets described in any one of (1) to (7) above.
(10) A motor core including a rotor core and a stator core, in both of which a plurality of non-oriented electrical steel sheets is laminated,

wherein the non-oriented electrical steel sheets have a base metal steel sheet and an insulating coating film formed on a surface of the base metal steel sheet,
wherein the chemical composition of the base metal steel sheet includes, by mass%,

C: 0.0030% or less,
Si: 3.2 to 6.5%,
Mn: 0.05 to 3.5%,
P: 0.005 to 0.10%,
S: 0.0030% or less,
Al: 1.0% or less,
Ti: 0.0030% or less,
B: 0.0010% or less,
Mo: 0.030% or less,
V: 0.0010% or less,
Ca: 0 to 0.0050%,
Mg: 0 to 0.0050%, and
REM: 0 to 0.0050%,
with a balance being Fe and impurities, and
satisfies Formula (i) below, and
wherein the chemical composition of the insulating coating film on the non-oriented electrical steel sheet constituting the rotor core satisfies Formula (ii) below, and
an amount of carbides in the insulating coating film in the non-oriented electrical steel sheet constituting the stator core is 10 mg/m$^2$ or more in terms of carbon amount.

$$S - 5/3 \times Mg - 4/5 \times Ca - 1/4 \times REM < 0.0005 \quad \cdots\cdots \quad (i)$$

$$[M] - [C] + 1/2 \times [O] > 0 \quad \cdots\cdots \quad (ii)$$

Here, the element symbols in Formula (i) above represent the content (mass%) of each element in the base metal steel sheet, [M] in Formula (ii) above means the total atomic concentration (at%) of one or more elements selected from Mn, Ti, Zr, Hf, Ta, Nb, V, Mo and Zn contained in the insulating coating film, and [C] and [O] mean the atomic concentration (at%) of C and O contained in the insulating coating film.

(11) A method for manufacturing a motor core,
wherein the non-oriented electrical steel sheets described in any one of (1) to (7) above are subjected to stress relief annealing in a temperature range of 750 to 900°C, after being punched into a predetermined shape and laminated.

ADVANTAGEOUS EFFECT OF INVENTION

According to the present invention, it is possible to stably obtain non-oriented electrical steel sheets with low iron loss.

BRIEF DESCRIPTION OF DRAWINGS

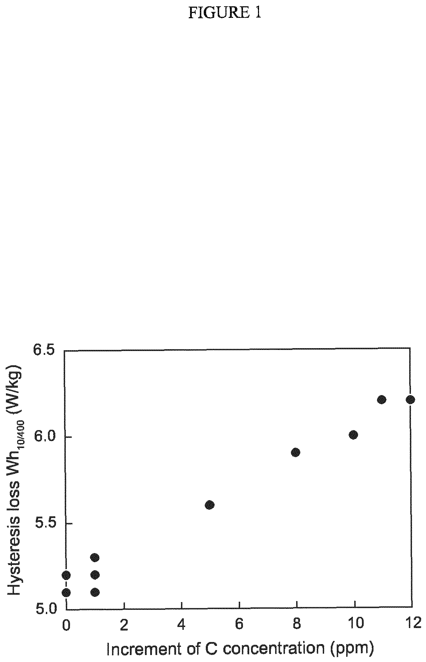

[Fig. 1] Fig. 1 shows a relationship between the increment of C concentration and the iron loss (hysteresis loss).

DESCRIPTION OF EMBODIMENTS

As a result of the inventors' study to solve the above issues, the following findings has been obtained.
First, an investigation was conducted to determine why the iron loss did not improve as much as expected when three measures to improve magnetic properties were taken simultaneously: higher Si, reduction of sulfides, and stress relief annealing.
As a result, it was found that when multiple non-oriented electrical steel sheets are laminated and then subjected to stress relief annealing at high temperatures, the organic resin in the insulating coating film thermally decomposes, and that although some of it is liberated as gas, the rest of the carbon is left free and remaining. It was also discovered that this remaining carbon penetrates into the steel sheet and reacts with Si, Mn, Cr, etc. in the steel, precipitating as carbides such as SiC, MnC, CrC (chemical bonding ratios are omitted since there are many types), etc. at grain boundaries. Such reactions are more likely to occur when multiple electrical steel sheets are heated in a laminated condition. These carbides interfere with domain wall displacement, thereby increasing the hysteresis loss and causing iron loss deterioration.

Precipitation of carbides such as SiC does not occur when the Si content in the steel is low. In addition, when the amount of so-called free S, which remains unconsumed as precipitates, is high, carbon in the insulating coating film is suppressed from penetrating into the steel sheet. Furthermore, decomposition of organic resins and penetration of carbon into steel sheets are also suppressed when the stress relief annealing temperature is low. That is, the deterioration of iron loss due to carbide precipitation becomes apparent when the three conditions of high Si, low sulfide content, and high temperature stress relief annealing are met.

The present inventors further investigated methods to suppress the deterioration of iron loss due to the carbide precipitation, and resultantly have found that by including one or more elements selected from Mn, Ti, Zr, Hf, Ta, Nb, V, Mo, and Zn in the insulating coating film, the carbon released and remaining in the insulating coating film reacts with these elements to form carbides, which are then deposited on the surface of the insulating coating film, thereby being detoxified.

The present invention is based on the above findings. Each requirement of the invention is described in detail below.

## 1. Overall Configuration

The non-oriented electrical steel sheet of one embodiment of the present invention includes a base metal steel sheet and an insulating coating film formed on the surface of the base metal steel sheet. The chemical compositions of the base metal steel sheet and the insulating coating film are described below.

## 2. Chemical Composition of Base Metal Steel Sheet

The reasons for the limitation of each element are as follows. In the following explanation, "%" for content means "mass percent".

### C: 0.0030% or less

C is an element that contributes to strengthening steel sheets but causes the iron loss deterioration. The C content of 0.0030% or more causes the iron loss deterioration in non-oriented electrical steel sheets, and good magnetic properties cannot be obtained. Therefore, the C content is set to 0.0030% or less. The C content is preferably 0.0027% or less, and more preferably 0.0025% or less. Since an excessive reduction of C content leads to an increase in production cost, it is preferable that the C content be 0.0001% or more, and it is more preferable that the C content be 0.0005% or more.

### Si: 3.2 to 6.5%

Si is an element that improves the iron loss by increasing electrical resistance of steel. Si is also an effective element for increasing the strength of steel sheets due to its high solid solution strengthening ability. On the other hand, an excessive Si content may cause a significant degradation in workability, making cold rolling difficult. Therefore, the Si content is set to 3.2 to 6.5%. The Si content is preferably 3.3% or more; the Si content is preferably 6.0% or less, 5.5% or less, 5.0% or less, or 4.5% or less.

### Mn: 0.05 to 3.5%

Mn is an element that improves the iron loss by increasing the electrical resistance of steel. If the Mn content is too low, the effect of increasing the electrical resistance is small and grain growthability during final annealing may deteriorate due to the precipitation of fine sulfides (MnS). On the other hand, an excessive Mn content may reduce the magnetic flux density. Therefore, the Mn content is set to 0.05 to 3.5%. The Mn content is preferably 0.10% or more, or 0.20% or more. The Mn content is preferably 3.0% or less, less than 3.0%, 2.8% or less, or 2.5% or less.

### P: 0.005 to 0.10%

P is contained in steel as an impurity, and its excessive content may significantly reduce the ductility of steel sheets. On the other hand, P is an element with high solid solution strengthening ability and is therefore an effective element in increasing the strength of steel sheets. P also has the effect of suppressing carbide formation after stress relief annealing by competing with C for segregation at the grain boundaries. Therefore, the P content is set to 0.005 to 0.10%. The P content is preferably 0.050% or less.

S: 0.0030% or less

S is an element that increases the iron loss by forming fine precipitates of MnS and deteriorates the magnetic properties of the steel sheets. Therefore, the S content is set to 0.0030% or less. The S content is preferably 0.0015% or less. There is no need to set a lower limit for S content, but excessive attempts to reduce S will lead to a significant increase in steelmaking costs. Therefore, it is preferable that the S content be 0.0005% or more.

Al: 1.0% or less

Al is an element that improves the iron loss by increasing the electrical resistance of steel. However, an excessive Al content may reduce the magnetic flux density. Therefore, the Al content is set to 1.0% or less; the Al content is preferably 0.80% or less. If the above effects are to be obtained, it is preferable that the Al content be 0.0005% or more, more than 0.0010%, more than 0.010%, or 0.10% or more. In the present description, the term "Al content" means the content of sol. Al (acid-soluble Al).

Ti: 0.0030% or less
B: 0.0010% or less
Mo: 0.030% or less
V: 0.0010% or less

Ti, B, Mo, and V are elements that are mixed in unavoidably and can combine with carbon or nitrogen to form precipitates (carbides and nitrides). If carbides or nitrides are formed, these precipitates themselves may deteriorate the magnetic properties. Furthermore, they may inhibit growth of crystal grains during the final annealing process, thereby deteriorating the magnetic properties. Therefore, the Ti content is set to 0.0030% or less, the B content is set to 0.0010% or less, the Mo content is set to 0.030% or less, and the V content is set to 0.0010% or less.

The Ti content is preferably 0.0020% or less, the B content is preferably 0.0008% or less, the Mo content is preferably 0.020% or less, and the V content is preferably 0.0008% or less. There is no need to set a lower limit for the content of these elements, and even 0% is acceptable, but an extreme reduction may lead to an increase in production costs. Therefore, the Ti content is preferably 0.0005% or more, the B content is preferably 0.0001% or more, the Mo content is preferably 0.005% or more, and the V content is preferably 0.0001% or more.

Ca: 0 to 0.0050%
Mg: 0 to 0.0050%
REM: 0 to 0.0050%

Ca, Mg, and REM are elements that form sulfides to fix S and contribute to iron loss reduction, so one or more of these elements needs to be included to satisfy Formula (i) below. However, since an excessive content of these elements may worsen economic efficiency, so Ca is set to 0.0050% or less, Mg is set to 0.0050% or less, and REM is set to 0.0050% or less.

$$S - 5/3 \times Mg - 4/5 \times Ca - 1/4 \times REM < 0.0005 \dots \dots (i)$$

Here, the element symbols in Formula (i) above represent the content (mass %) of each element in the base metal steel sheet.

Sn: 0.10% or less
Sb: 0.10% or less
Ni: 0.10% or less
Cr: 0.10% or less
Cu: 0.10% or less

Sn, Sb, Ni, Cr, and Cu are elements that are mixed in unavoidably. However, these elements may be intentionally included because they are also elements that improve the magnetic properties.

However, since an excessive amount of these elements may worsen economic efficiency, the content of any of these elements is 0.10% or less, and preferably 0.05% or less even if they are intentionally included. If the effect of improving magnetic properties is desired, one or more elements selected from Sn: 0.01% or more, Sb: 0.01% or more, Ni: 0.01% or more, Cr: 0.01% or more, and Cu: 0.01% or more are preferably included.

In the chemical composition of the base metal steel sheet, the balance is Fe and impurities. "Impurities" here refers to components that are mixed in during the industrial manufacture of steel due to various factors such as ores, scrap, and other raw materials and manufacturing processes, and which are acceptable to the extent that they do not adversely affect the present invention.

3. Chemical Composition of Insulating coating film

In the non-oriented electrical steel sheet in the present invention, there is no restriction on the type of insulating coating film, but it is preferable to use a composite coating of an inorganic compound such as phosphate-based compounds, silica-based compounds, Zr-based compounds etc., and an organic resin. Conventionally, chromate-based insulating coating films mainly using dichromate as a main raw material have been mainly employed, but since hexavalent chromium is highly toxic, it is preferable that insulating coating films do not contain chromium from the standpoint of preserving a working environment during manufacturing.

There is no restriction on the type of organic resin, and one or more of acrylic resins, styrene resins, acrylic-styrene resins, epoxy resins, polyester resins, phenol resins, and urethane resins, for example, can be employed.

As mentioned above, in order to immobilize the carbon released and remaining in the insulating coating film as carbides to detoxify it, one or more elements selected from Mn, Ti, Zr, Hf, Ta, Nb, V, Mo and Zn are contained in the insulating coating film in the present invention. More specifically, the chemical composition of the insulating coating film needs to satisfy Formula (ii) below.

$$[M] - [C] + 1/2 \times [O] > 0 \cdots\cdots(ii)$$

Here, [M] in Formula (ii) above means the total atomic concentration (at%) of one or more elements selected from Mn, Ti, Zr, Hf, Ta, Nb, V, Mo, and Zn, and [C] and [O] mean the atomic concentration (at%) of C and O contained in the insulating coating film, respectively.

Note that, Zn has relatively low carbide forming ability among the above elements. Mn also has a lower carbide forming ability than the other elements, though it is superior to Zn. Therefore, the insulating coating film preferably contains one or more elements selected from Mn, Ti, Zr, Hf, Ta, Nb, V, and Mo, excluding Zn, and more preferably one or more elements selected from Ti, Zr, Hf, Ta, Nb, V, and Mo, excluding Zn and Mn, in a range satisfying Formula (ii) above.

In the present invention, [M], [C], and [O] in the insulating coating film shall be measured by the following procedure. First, the case where the insulating coating film contains inorganic compounds such as phosphate-based compounds, or silica-based compounds, which can be dissolved by alkali treatment, is described. First, gravimetric measurement and chemical composition analysis are performed on the entire non-oriented electrical steel sheet, including the insulating coating film. The chemical composition is analyzed for [M] by ICP-MS in this case. For [C], the sample is analyzed by combustion and infrared absorbance measurement in accordance with JIS G 1211-3:2018 (hereinafter also referred to as "combustion-infrared absorption method"). For [O], [O] is quantified by melting the sample in a graphite crucible in a He atmosphere and analyzing the carbon dioxide gas generated with an infrared detector. Next, the base metal from which the insulating coating film was removed by alkali treatment is similarly subjected to gravimetric measurement and chemical composition analysis. [M], [C], and [O] in the insulating coating film are calculated from the difference before and after the removal of the insulating coating film.

Next, the case will be described where the insulating coating film contains inorganic compounds such as Zr-based compounds and cannot be dissolved by alkali treatment. First, only the surface layer is peeled off by mechanical polishing in such a way that all of the insulating coating film is included. In this case, alumina is used as an abrasive. Then, only the base metal attached to the insulating coating film is completely removed using hydrochloric acid. The separated insulating coating film is then analyzed for chemical composition by the method described above to determine [M], [C], and [O] in the insulating coating film.

4. Thickness

In the non-oriented electrical steel sheet of the present embodiment, there is no need to set particular restrictions on the thickness of the base metal steel sheet and the thickness of the insulating coating film. However, when the thickness of the base metal steel sheet is 0.30 mm or more, or the coating thickness of the insulating coating film exceeds 1.0 $\mu$m, the carbon produced by thermal decomposition of organic resins is more likely to be liberated as carbon dioxide gas from between the layers of steel sheets, and thereby the carbon is prevented from being released and remaining.

That is, the effect of the present invention is more pronounced when the base metal steel sheet and the insulating coating film are thin. Therefore, the thickness of the base metal steel sheet is preferably less than 0.30 mm, and the thickness of the insulating coating film is preferably 1.0 $\mu$m or less.

5. Iron Core and Motor Core

The iron core of one embodiment of the present invention includes the above-mentioned non-oriented electrical steel sheets. The above iron core is obtained by laminating a plurality of non-oriented electrical steel sheets. It is sufficient if some or all of the plurality of non-oriented electrical steel sheets to be laminated are the above-mentioned non-oriented electrical steel sheets.

The motor core according to one embodiment of the present invention includes a rotor core and a stator core. Here, strength is required for the rotor core. For that reason, the rotor core is obtained by punching the above non-oriented electrical steel sheet into a predetermined shape and laminating multiple sheets. In other words, the rotor core in the present embodiment is not subjected to stress relief annealing. Therefore, the chemical composition of the insulating coating film in the non-oriented electrical steel sheet that constitutes the rotor core satisfies Formula (ii) above.

On the other hand, the stator core is required to have superior magnetic properties. Therefore, the stator core is obtained by punching the above-mentioned non-oriented electrical steel sheets into a predetermined shape, laminating multiple sheets, and then subjecting them to stress relief annealing. As described above, when a plurality of non-oriented electrical steel sheets is laminated and then subjected to stress relief annealing, the organic resin in the insulating coating film is thermally decomposed and some carbon is released and remains. In the present invention, one or more elements selected from Mn, Ti, Zr, Hf, Ta, Nb, V, Mo, and Zn are contained in the insulating coating film to fix the carbon released and remaining in the insulating coating film as carbides.

Therefore, the motor core of the present embodiment contains carbides of 10 mg/m$^2$ or more in terms of carbon amount in the insulating coating film after stress relief annealing, i.e., in the insulating coating film of the non-oriented electrical steel sheet constituting the stator core. In other words, the fact that the amount of carbides in the insulating coating film is 10 mg/m$^2$ or more in terms of carbon amount means that the carbon released by thermal decomposition of the organic resin in the insulating coating film forms carbides with one or more elements selected from Mn, Ti, Zr, Hf, Ta, Nb, V, Mo and Zn as the constituent elements of the insulating coating film, thereby being able to be prevented from penetrating into the base metal steel sheet. The amount of carbides in the insulating coating film may be 13 mg/m$^2$ or more, and further, more than 15 mg/m$^2$. Note that the above carbides are carbides containing one or more elements selected from Mn, Ti, Zr, Hf, Ta, Nb, V, Mo, and Zn.

The amount of carbides in terms of carbon amount in the insulating coating film means the amount of carbon in the carbides in the insulating coating film formed on the surface of a unit area of base metal steel sheet. In the present embodiment, the amount of carbides in the insulating coating film is measured by the following procedure. First, the case in which the insulating coating film contains inorganic compounds such as phosphate-based compounds or silica-based compounds and can be dissolved by alkali treatment is described. First, only the insulating coating film is dissolved by alkali treatment. In this case, the carbide is not dissolved, but remains in the alkaline solution as a residue. Therefore, the residue is filtered and dried, and the amount of carbon is measured by the combustion-infrared absorption method. The weight is then divided by the area of the surface of the dissolved base metal steel sheet on which the insulating coating film was formed, and the amount of carbide in terms of the amount of carbon in the insulating coating film is determined.

Next, the case will be described where the insulating coating film contains inorganic compounds such as Zr-based compounds and cannot be dissolved by alkali treatment. First, only the surface layer is peeled off by mechanical polishing in such a way that all of the insulating coating film is included. In this case, alumina is used as an abrasive. Then, the base metal attached to the insulating coating film is completely removed using hydrochloric acid. The residue after the removal of the base metal is filtered and dried, and the amount of carbon is measured by the combustion-infrared absorption method. The amount of carbon in the insulating coating film is then obtained by dividing the amount of carbon by the area of the surface of the dissolved base metal steel sheet on which the insulating coating film was formed. Since it is considered that no carbon as resin remains in the insulating coating film after stress relief annealing, the amount of carbon measured is entirely attributable to carbides.

6. Relationship between the Increment of C Concentration and the Iron Loss

As described above, stress relief annealing at high temperatures causes thermal decomposition of the organic resin in the insulating coating film, and the carbon released and remaining penetrates into the base metal steel sheet and precipitates as SiC, MnC, CrC, etc., resulting in the deterioration of iron loss. That is, the larger the increase in C concentration in the base metal steel sheet after stress relief annealing, the greater the deterioration of iron loss. Therefore, in the present invention, the increment of C concentration is used as an indicator of the degree of improvement of the iron loss.

The increment of C concentration can be determined, for example, by the following method. First, five sheets of 100 mm × 100 mm non-oriented electrical steel sheet are laminated, and then annealed at 800°C for 2 hours in an atmosphere of $N_2$: 100% (dew point less than 30°C). Then, one of the five non-oriented electrical steel sheets laminated is removed from the center of the laminated sheets in the laminating direction, and the C concentration in the base metal steel sheet is measured. The amount of increase in C concentration from the C concentration in the base metal steel sheet before annealing is defined as the increment of C concentration.

Here, for the C concentration in the base metal steel sheet, the insulating coating film is removed by mechanical polishing on each of the front and back surfaces of the non-oriented electrical steel sheet. In order to completely remove the insulating coating film, the insulating coating film is removed, and after the base metal portion is visible, an additional 10 μm is removed in the thickness direction. The remaining base metal steel sheet is then measured for C concentration using the combustion-infrared absorption method.

Note that the relationship between the increment of C concentration in the base metal steel sheet after stress relief annealing and the iron loss has been confirmed by preliminary experiments conducted by the present inventors. The results are shown below.

In the non-oriented electrical steel sheet of test No. 1 shown in Table 1 below, the chemical composition of the insulating coating film was adjusted to prepare non-oriented electrical steel sheets with various values of [M] - [C] + 1/2 × [O]. The obtained non-oriented electrical steel sheets were measured for the increment of C concentration by the method described above.

Furthermore, the Epstein test specified in JIS C 2550-1:2011 was conducted on the same non-oriented electrical steel sheet, i.e., one non-oriented electrical steel sheet in the center of the laminating direction, which was taken out after laminating and annealing. The iron loss obtained by DC measurement between ±1.0 T was considered as the hysteresis loss $Wh_{10/1}$ at 1 Hz, and the hysteresis loss $Wh_{10/400}$ at 400 Hz was calculated as 400 times that value.

Fig. 1 shows a relationship between the increment of C concentration and the iron loss (hysteresis loss). As shown in Fig. 1, there is a good correlation between the increment of C concentration and the iron loss, and the lower the increment of C concentration, the better the iron loss. This indicates that the increment of C concentration is useful as an indicator of the degree of improvement in the iron loss.

7. Method of Manufacturing Non-Oriented Electrical steel sheet

There are no particular restrictions on the method of manufacturing the non-oriented electrical steel sheet of the present embodiment. For example, after heating a slab having the above chemical composition, hot rolling is performed, hot-band annealing is performed if necessary, pickling is performed, cold rolling is performed, and then final annealing is performed to obtain the base metal steel sheet. If necessary, skin pass rolling may be applied after final annealing.

There are no particular restrictions on the conditions for hot-band annealing, cold rolling, and final annealing, but hot-band annealing is preferably performed in a temperature range of 900 to 1100°C. Cold rolling may be conducted after heating to 80 to 300°C from the viewpoint of rollability. For final annealing, it is preferable to perform the annealing in a temperature range of 700 to 1050°C, and it is more preferable to perform the annealing in a temperature range of 900°C or lower.

The reduction ratio in the skin pass rolling is preferably 1 to 10%. A reduction ratio of 1% or more provides sufficient strain for strain-induced grain boundary migration. On the other hand, by setting the reduction ratio to 10% or less, the non-uniformity in the amount of strain for each crystallographic orientation can be maintained.

Subsequently, an insulating coating is formed on the surface of the obtained base metal steel sheet. Here, the process of forming the insulating coating is not particularly limited, and the insulating coating treatment solution having the above-mentioned chemical composition should be used to apply and dry the treatment solution. However, from the viewpoint of suppressing the penetration of carbon into the base steel sheet, it is important to control the heating rate during drying and baking of the treatment solution.

Specifically, the heating rate for drying and baking of the treatment solution is preferably 40°C/s or higher, and more preferably 50°C/s or higher. If the heating rate is slow, the flattening of the coating surface will prevent carbon dioxide and other gases from escaping during stress relief annealing, resulting in more carbon penetrating into the steel. Conversely, if the heating rate is fast, the formation of minute irregularities will make it easier to avoid the adverse effects of carbon.

In addition, the baking temperature is preferably between 270°C and 350°C. If the baking temperature is less than 270°C, the flattening of the coating surface prevents the release of carbon dioxide and other gases during the stress relief annealing process, resulting in more carbon penetration into the steel. Conversely, if the baking temperature is high, minute irregularities are formed, making it easier to avoid the negative effects of carbon. On the other hand, if the baking temperature is too high, the resin in the coating will start burning at this stage, resulting in a degradation of the punchability. It is more preferable to set the baking temperature between 300°C and 350°C.

The surface of the base metal steel sheet on which the insulating coating film is to be formed may be subjected to any pretreatment, such as degreasing with alkali or pickling with acid including hydrochloric acid, sulfuric acid, phosphoric acid, etc., before applying the treatment solution, or it may be left after final annealing without any such pretreatment.

8. Method for Manufacturing Iron Core and Motor Core

The method of manufacturing an iron core according to one embodiment of the present invention includes the process of laminating the above-mentioned non-oriented electrical steel sheets. In this process, a plurality of oriented electrical steel sheets is laminated. It is sufficient if some or all of the plurality of non-oriented electrical steel sheets to be laminated are the above-mentioned non-oriented electrical steel sheets.

The motor core is obtained by applying stress relief annealing to the above non-oriented electrical steel sheets after punching them into a predetermined shape and laminating them. As mentioned above, it is preferable not to apply stress relief annealing to the rotor core, so the motor core referred to here should be a stator core.

There are no restrictions on the conditions of stress relief annealing, but from the viewpoint of improving magnetic properties, it is preferable to perform stress relief annealing at a high temperature, and specifically, the annealing temperature should be in a range of 750 to 900°C. There is also no limit on the annealing time, and for example, 0.5 to 5.0 h is preferred. Note that the annealing time is the time during which the motor core is at 750°C or higher, and the heating time and cooling time below 750°C may be set as appropriate.

As mentioned above, when stress relief annealing is performed at high temperatures, the deterioration of iron loss due to the carbide precipitation tends to become apparent, but in the present invention, this can be suppressed by optimizing the chemical composition of the insulating coating film. In other words, then non-oriented electrical steel sheet of the present embodiment can be suitably used for applications where stress relief annealing is performed in the temperature range of 750 to 900°C after punching to a predetermined shape and laminating.

The present invention will be described in more detail with reference to examples below, but the present invention is not limited to these examples.

EXAMPLES

A slab having the predetermined chemical composition was heated to 1150°C, hot rolled at a finishing temperature of 800°C to a final thickness of 2.2 mm, and coiled at 700°C to make hot-rolled steel sheets. The hot-rolled steel sheets were then hot-band annealed at 950°C for 40s, and the surface scale was removed by pickling. The above steel sheets were then cold rolled to a thickness of 0.25 mm.

Then, the steel sheets were annealed at 900°C for 20 seconds to make the base metal steel sheet. The chemical composition of the base metal steel sheets obtained is shown in Table 1. The thicknesses of the base metal steel sheets were all 0.25 mm.

[Table 1]

Table 1

| Steel | Chemical composition (mass%, balance: Fe and impurities) | | | | | | | | | | | | | | | | | | Left-hand value of Formula (i)† |
|---|---|---|---|---|---|---|---|---|---|---|---|---|---|---|---|---|---|---|---|
| | C | Si | Mn | P | S | Al | Ti | B | Mo | V | Ca | Mg | REM | Sn | Sb | Ni | Cr | Cu | |
| A | 0.0021 | 3.4 | 0.50 | 0.020 | 0.0013 | 0.50 | 0.0015 | 0.0004 | 0.016 | 0.0008 | 0.0007 | 0.0003 | - | - | - | - | - | - | 0.0002 |
| B | 0.0010 | 3.5 | 0.20 | 0.008 | 0.0005 | 0.20 | 0.0017 | - | - | - | - | 0.0004 | - | 0.02 | - | - | - | - | -0.0002 |
| C | 0.0014 | 3.7 | 1.0 | 0.011 | 0.0017 | 0.20 | 0.0007 | 0.0002 | 0.021 | 0.0009 | 0.0015 | - | 0.0032 | - | 0.01 | 0.03 | 0.05 | 0.06 | -0.0003 |
| D | 0.0023 | 3.9 | 2.1 | 0.062 | 0.0011 | 0.01 | 0.0013 | - | 0.013 | 0.0006 | 0.0004 | 0.0005 | - | - | - | 0.05 | - | 0.03 | -0.0001 |
| E | 0.0016 | 3.5 | 0.80 | 0.013 | 0.0025 | 0.70 | 0.0021 | 0.0006 | 0.004 | - | 0.0021 | - | 0.0035 | 0.01 | - | - | - | 0.04 | -0.0001 |
| F | 0.0019 | 4.2 | 0.60 | 0.009 | 0.0007 | 0.30 | 0.0011 | - | - | - | - | 0.0006 | - | 0.01 | - | 0.02 | 0.02 | 0.05 | -0.0003 |
| G | 0.0021 | 3.5 | 2.8 | 0.010 | 0.0014 | 0.30 | 0.0008 | - | - | - | 0.0009 | - | 0.0013 | 0.02 | - | 0.02 | - | 0.04 | 0.0004 |
| H | 0.0017 | 3.4 | 0.40 | 0.011 | 0.0012 | 0.40 | 0.0014 | - | 0.008 | - | 0.0003 | - | - | 0.01 | - | 0.03 | 0.02 | 0.04 | 0.0010 |
| I | 0.0024 | 3.8 | 0.07 | 0.008 | 0.0012 | 0.20 | 0.0008 | - | - | - | 0.0005 | 0.0006 | - | 0.01 | - | 0.03 | 0.03 | 0.03 | -0.0002 |
| † S-5/3×Mg-4/5×Ca-1/4×REM<0.0005 ... (i) | | | | | | | | | | | | | | | | | | |

EP 4 417 716 A1

Then, an insulating coating film was formed on the surface of the base metal steel sheet by applying the insulating coating film treatment solution consisting of the components shown in Table 2 and baking it in air at the temperature shown in Table 2. Non-oriented electrical steel sheets were produced in this way. The chemical composition and thickness of the insulating coating film are also shown in Table 2.

[Table 2]

Table 2

| Test No. | Steel | Baking temperature (°C) | Heating rate for baking (°C/s) | Insulating coating film | | | | | | | | | | Increment of C concentration (ppm) | Iron loss $W_{10/400}$ (W/kg) | Remarks |
|---|---|---|---|---|---|---|---|---|---|---|---|---|---|---|---|---|
| | | | | Component | | | Atomic concentration (at%) | | | Right-hand value of Formula (ii)‡ | Film thickness (μm) | Carbides amount in terms of carbon amount (mg/m²) | | | | |
| | | | | Inorganic compound | Organic resin | Others | [M] | [C] | [O] | | | | | | | |
| 1 | A | 300 | 56 | Al-phosphate | Acrylic resin | Zr-phosphate | 2 | 18 | 38 | 3.0 | 0.7 | 19 | 0 | 10.7 | Inventive example |
| 2 | A | 320 | 32 | Al-phosphate | Acrylic resin | Zr-phosphate | 2 | 18 | 38 | 3.0 | 0.8 | 18 | 1 | 10.8 | Inventive example |
| 3 | A | 300 | 63 | Zirconia | Acrylic resin | - | 11 | 22 | 31 | 4.5 | 0.6 | 23 | 0 | 10.7 | Inventive example |
| 4 | A | 300 | 51 | Mn-phosphate | Acrylic resin | - | 5 | 24 | 27 | -5.5 | 0.9 | 1 | 6 | 11.5 | Comparative example |
| 5 | B | 330 | 41 | Zr-phosphate | Epoxy resin | - | 5 | 20 | 37 | 3.5 | 0.9 | 20 | 0 | 11.1 | Inventive example |
| 6 | B | 350 | 44 | Silica | Polyester resin | Zirconia | 8 | 22 | 32 | 2.0 | 0.8 | 14 | 1 | 11.2 | Inventive example |
| 7 | B | 290 | 55 | Silica | Polyester resin | Zirconia | 8 | 22 | 32 | 2.0 | 1.6 | 16 | 0 | 11.2 | Inventive example |
| 8 | B | 300 | 54 | Al-phosphate | Polyester resin | - | 0 | 22 | 31 | -6.5 | 0.7 | 1 | 7 | 11.8 | Comparative example |
| 9 | C | 350 | 57 | Mn-phosphate | Epoxy resin | - | 8 | 18 | 34 | 7.0 | 0.7 | 24 | 1 | 10.6 | Inventive example |
| 10 | C | 300 | 66 | Zirconia | Polyester resin | Hf | 5 | 20 | 34 | 2.0 | 0.8 | 16 | 0 | 10.5 | Inventive example |
| 11 | C | 290 | 57 | Al-phosphate | Acrylic resin | - | 0 | 22 | 31 | -6.5 | 1.5 | 3 | 0 | 10.7 | Comparative example |

EP 4 417 716 A1

(continued)

| Test No. | Steel | Baking temperature (°C) | Heating rate for baking (°C/s) | Insulating coating film | | | | | | | | | | Increment of C concentration (ppm) | Iron loss $W_{10/400}$ (W/kg) | Remarks |
|---|---|---|---|---|---|---|---|---|---|---|---|---|---|---|---|---|
| | | | | Component | | | Atomic concentration (at%) | | | Right-hand value of Formula (ii)‡ | Film thickness (μm) | Carbides amount in terms of carbon amount (mg/m²) | | | | |
| | | | | Inorganic compound | Organic resin | Others | [M] | [C] | [O] | | | | | | | |
| 12 | D | 300 | 53 | Silica | Epoxy resin | Zirconia, Tantalum | 8 | 20 | 35 | 5.5 | 0.8 | 21 | 0 | 9. 3 | Inventive example |
| 13 | D | 300 | 49 | Al-phosphate | Polyester resin | Mn-phosphate | 1 | 23 | 30 | -7.0 | 0.9 | 2 | 7 | 11.6 | Comparative example |
| 14 | D | 320 | 57 | Silica | Acrylic resin | Zirconia | 3 | 21 | 32 | -2.0 | 0.7 | 3 | 4 | 11.5 | Comparative example |
| 15 | D | 280 | 39 | Zn-phosphate | Acrylic resin | Zr-phosphate | 3 | 27 | 25 | -11.5 | 0.7 | 1 | 9 | 11.7 | Comparative example |
| 16 | E | 300 | 54 | Al-phosphate | Acrylic resin | Zr-phosphate | 2 | 18 | 39 | 3.5 | 0.7 | 20 | 0 | 10.3 | Inventive example |
| 17 | E | 280 | 63 | Zirconia | Epoxy resin | - | 8 | 22 | 32 | 2.0 | 0.8 | 16 | 1 | 10.4 | Inventive example |
| 18 | E | 350 | 48 | Mn-phosphate | Polyester resin | Zn-phosphate | 4 | 20 | 34 | 1.0 | 0.7 | 13 | 0 | 10.4 | Inventive example |
| 19 | E | 300 | 58 | Al-phosphate | Acrylic resin | Zr-phosphate | 1 | 23 | 30 | -7.0 | 0.8 | 2 | 8 | 11.6 | Comparative example |
| 20 | F | 320 | 52 | Silica | Acrylic resin | Zirconia | 8 | 22 | 32 | 2.0 | 0.9 | 16 | 0 | 10.1 | Inventive example |
| 21 | G | 300 | 48 | Mn-phosphate | Epoxy resin | - | 8 | 18 | 34 | 7.0 | 0.8 | 22 | 1 | 9.8 | Inventive example |
| 22 | H | 280 | 41 | Zirconia | Epoxy resin | - | 8 | 22 | 32 | 2.0 | 0.9 | 16 | 0 | 11.8 | Comparative example |
| 23 | I | 300 | 41 | Zr-phosphate | Epoxy resin | - | 5 | 20 | 37 | 3.5 | 0.7 | 20 | 0 | 10.9 | Inventive example |

14

(continued)

| Test No. | Steel | Baking temperature (°C) | Heating rate for baking (°C/s) | Insulating coating film | | | | | | | | | Increment of C concentration (ppm) | Iron loss $W_{10/400}$ (W/kg) | Remarks |
| | | | | Component | | | Atomic concentration (at%) | | | Right-hand value of Formula (ii)‡ | Film thickness (μm) | Carbides amount in terms of carbon amount (mg/m²) | | | |
| | | | | Inorganic compound | Organic resin | Others | [M] | [C] | [O] | | | | | | |
| 24 | G | 250 | 25 | Mn-phosphate | Epoxy resin | - | 8 | 18 | 34 | 7.0 | 0.7 | 11 | 4 | 11.5 | Reference example |
| 25 | G | 250 | 25 | Al-phosphate | Acrylic resin | Zr-phosphate | 1 | 23 | 30 | -7.0 | 0.8 | 2 | 10 | 11.9 | Comparative example |

‡ $[M]-[C]+1/2\times[O]>0$ ...(ii)

The resulting non-oriented electrical steel sheets were then punched into the predetermined shape, laminated into five sheets, and subjected to stress relief annealing at 800°C for 2 hours in an atmosphere of N$_2$: 100% (dew point: -30°C). Of the five laminated non-oriented electrical steel sheets, one sheet in the center of the laminating direction was taken out, and the iron loss W$_{10/400}$ (W/kg) was measured by the Epstein test specified in JIS C 2550-1:2011. The iron loss W$_{10/400}$ means the total iron loss generated under the conditions of a maximum magnetic flux density of 1.0 T and a frequency of 400 Hz. In EXAMPLE, the iron loss W$_{10/400}$ was judged to be low when it was less than 11.5 W/kg.

Next, the C concentration in the base metal steel sheet was measured for one non-oriented electrical steel sheet in the center of the laminating direction as described above, and the increment of C concentration was determined by comparing it with the C concentration in the base metal steel sheet before annealing. The results are shown in Table 2.

As shown in Table 2, in test Nos. 1 to 3, 5 to 7, 9, 10, 12, 16 to 18, 20, 21, and 23 of the inventive examples satisfying Formula (ii), the increment of C concentration was less than 1 ppm and the iron loss was also excellent. On the other hand, test Nos. 4, 8, 13-15, and 19, which are comparative examples, did not satisfy Formula (ii), resulting in a large increment of C concentration and a deterioration of iron loss. For test No. 11, even though Formula (ii) was not satisfied, the increment of C concentration did not increase because the thickness of the insulating coating film exceeded 1.0 μm. In addition, for test No. 22, the iron loss was deteriorated because Formula (i) was not satisfied, even though Formula (ii) was satisfied and the increment of C concentration was less than 1 ppm.

Furthermore, for test No. 24, the baking conditions were inappropriate, resulting in a large increment of C concentration and a deterioration of iron loss. As for test No. 25, the baking conditions were inappropriate and Formula (ii) was not satisfied, resulting in a large increment of C concentration and a deterioration of iron loss.

INDUSTRIAL APPLICABILITY

As described above, the present invention makes it possible to stably obtain non-oriented electrical steel sheets with low iron loss.

**Claims**

1. A non-oriented electrical steel sheet comprising:

   a base metal steel sheet and
   an insulating coating film formed on a surface of the base metal steel sheet,
   wherein the chemical composition of the base metal steel sheet comprises, by mass%,
   C: 0.0030% or less,
   Si: 3.2 to 6.5%,
   Mn: 0.05 to 3.5%,
   P: 0.005 to 0.10%,
   S: 0.0030% or less,
   Al: 1.0% or less,
   Ti: 0.0030% or less,
   B: 0.0010% or less,
   Mo: 0.030% or less,
   V: 0.0010% or less,
   Ca: 0 to 0.0050%,
   Mg: 0 to 0.0050%, and
   REM: 0 to 0.0050%,
   with a balance being Fe and impurities, and
   satisfies Formula (i) below, and
   wherein the chemical composition of the insulating coating film satisfies Formula (ii) below:

$$S - 5/3 \times Mg - 4/5 \times Ca - 1/4 \times REM < 0.0005 \ \ldots\ldots \ (i)$$

$$[M] - [C] + 1/2 \times [O] > 0 \ \ldots\ldots \ (ii)$$

   where, the element symbols in Formula (i) above represent the content (mass%) of each element in the base metal steel sheet, [M] in Formula (ii) above means the total atomic concentration (at%) of one or more elements selected from Mn, Ti, Zr, Hf, Ta, Nb, V, Mo and Zn contained in the insulating coating film, and [C] and [O] mean the atomic concentration (at%) of C and O contained in the insulating coating film, respectively.

2. The non-oriented electrical steel sheet according to claim 1,

wherein the chemical composition of the base metal steel sheet contains, in lieu of a part of the Fe, by mass%, one or more selected from
Sn: 0.10% or less,
Sb: 0.10% or less,
Ni: 0.10% or less,
Cr: 0.10% or less, and
Cu:0.10% or less.

3. The non-oriented electrical steel sheet according to claim 1 or claim 2,
wherein the base metal steel sheet has a thickness of less than 0.30 mm and the insulating coating film has a thickness of 1.0 $\mu$m or less.

4. The non-oriented electrical steel sheet according to any one of claim 1 to claim 3,
wherein the steel sheet is used for applications in which, after being punched into a predetermined shape and laminated, stress relief annealing is performed in a temperature range of 750 to 900°C.

5. The non-oriented electrical steel sheet according to any one of claim 1 to claim 4,
wherein after laminating five non-oriented electrical steel sheets and annealing at 800°C for two hours in an atmosphere of 100% $N_2$ and a dew point of -30°C, when the C concentration in the base steel of one of the five laminated non-oriented electrical steel sheets in the center of a laminating direction is measured, the increment of C concentration, which is the amount of increase from the C concentration in the base metal steel sheet of the non-oriented electrical steel sheet before annealing, is 1 ppm or less.

6. The non-oriented electrical steel sheet according to any one of claim 1 to claim 5,
wherein after laminating five non-oriented electrical steel sheets and annealing at 800°C for two hours in an atmosphere of 100% $N_2$ and a dew point of -30°C, the iron loss $W_{10/400}$ measured using one of the five laminated non-oriented electrical steel sheets in the center of the laminating direction is less than 11.5 W/kg.

7. The non-oriented electrical steel sheet according to any one of claim 1 to claim 6,
wherein after laminating five non-oriented electrical steel sheets and annealing at 800°C for two hours in an atmosphere of 100% $N_2$ and a dew point of -30°C, an amount of carbides contained in the insulating coating film in one of the five laminated non-oriented electrical steel sheets in the center of the laminating direction is 10 mg/m$^2$ or more in terms of carbon amount.

8. An iron core comprising the non-oriented electrical steel sheet according to any one of claim 1 to claim 7.

9. A method for manufacturing an iron core comprising a process of laminating the non-oriented electrical steel sheets according to any one of claim 1 to claim 7.

10. A motor core comprising a rotor core and a stator core, in both of which a plurality of non-oriented electrical steel sheets is laminated,

wherein the non-oriented electrical steel sheets have a base metal steel sheet and an insulating coating film formed on a surface of the base metal steel sheet,
wherein the chemical composition of the base metal steel sheet comprises, by mass%,
C: 0.0030% or less,
Si: 3.2 to 6.5%,
Mn: 0.05 to 3.5%,
P: 0.005 to 0.10%,
S: 0.0030% or less,
Al: 1.0% or less,
Ti: 0.0030% or less,
B: 0.0010% or less,

Mo: 0.030% or less,
V: 0.0010% or less,
Ca: 0 to 0.0050%,
Mg: 0 to 0.0050%, and
REM: 0 to 0.0050%,
with a balance being Fe and impurities, and
satisfies Formula (i) below; and
wherein the chemical composition of the insulating coating film on the non-oriented electrical steel sheet constituting the rotor core satisfies Formula (ii) below, and
an amount of carbides in the insulating coating film in the non-oriented electrical steel sheet constituting the stator core is 10 mg/m$^2$ or more in terms of carbon amount:

$$S - 5/3 \times Mg - 4/5 \times Ca - 1/4 \times REM < 0.0005 \quad \cdots\cdots \quad (i)$$

$$[M] - [C] + 1/2 \times [O] > 0 \quad \cdots\cdots \quad (ii)$$

where the element symbols in Formula (i) above represent the content (mass%) of each element in the base metal steel sheet, [M] in Formula (ii) above means the total atomic concentration (at%) of one or more elements selected from Mn, Ti, Zr, Hf, Ta, Nb, V, Mo and Zn contained in the insulating coating film, and [C] and [O] mean the atomic concentration (at%) of C and O contained in the insulating coating film.

**11.** A method for manufacturing a motor core,
wherein the non-oriented electrical steel sheets according to any one of claim 1 to claim 7 are subjected to stress relief annealing in the temperature range of 750 to 900°C, after being punched into a predetermined shape and laminated.

FIGURE 1

| **INTERNATIONAL SEARCH REPORT** | International application No. |
|---|---|
| | **PCT/JP2022/038106** |

**A. CLASSIFICATION OF SUBJECT MATTER**

*C21D 8/12*(2006.01)i; *C21D 9/00*(2006.01)i; *C22C 38/00*(2006.01)i; *C22C 38/14*(2006.01)i; *C22C 38/60*(2006.01)i; *H01F 41/02*(2006.01)i; *H01F 1/147*(2006.01)i; *C23C 22/00*(2006.01)i

FI: C22C38/00 303U; C22C38/14; C22C38/60; C23C22/00 B; H01F1/147 183; H01F41/02 B; C21D8/12 A; C21D9/00 S

According to International Patent Classification (IPC) or to both national classification and IPC

**B. FIELDS SEARCHED**

Minimum documentation searched (classification system followed by classification symbols)

C21D8/12; C21D9/00; C22C38/00; C22C38/14; C22C38/60; H01F41/02; H01F1/147; C23C22/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-31714 A (NIPPON STEEL CORP.) 01 March 2021 (2021-03-01)<br>claims, paragraphs [0001], [0002], [0038], [0039], [0064]-[0081], in particular, A11-A19 in table 1 | 1-11 |
| A | WO 2018/025941 A1 (NIPPON STEEL & SUMITOMO METAL CORP.) 08 February 2018 (2018-02-08)<br>claims | 4, 11 |
| A | WO 2021/117325 A1 (JFE STEEL CORP.) 17 June 2021 (2021-06-17)<br>entire text | 1-11 |
| A | JP 2009-68055 A (JFE STEEL CORP.) 02 April 2009 (2009-04-02)<br>entire text | 1-11 |
| A | WO 2016/125783 A1 (NIPPON STEEL & SUMITOMO METAL CORP.) 11 August 2016 (2016-08-11)<br>entire text | 1-11 |

☐ Further documents are listed in the continuation of Box C.   ☑ See patent family annex.

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| **29 November 2022** | **13 December 2022** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |
|---|---|

Form PCT/ISA/210 (second sheet) (January 2015)

**INTERNATIONAL SEARCH REPORT**
Information on patent family members

International application No.

**PCT/JP2022/038106**

| Patent document cited in search report | | | Publication date (day/month/year) | Patent family member(s) | | | Publication date (day/month/year) |
|---|---|---|---|---|---|---|---|
| JP | 2021-31714 | A | 01 March 2021 | (Family: none) | | | |
| WO | 2018/025941 | A1 | 08 February 2018 | US | 2019/0228891 | A1 | |
| | | | | claims | | | |
| | | | | EP | 3495525 | A1 | |
| | | | | KR | 10-2019-0003783 | A | |
| | | | | CN | 109563583 | A | |
| WO | 2021/117325 | A1 | 17 June 2021 | EP | 4036257 | A1 | |
| | | | | entire text | | | |
| | | | | US | 2022/0372600 | A1 | |
| | | | | KR | 10-2022-0062605 | A | |
| | | | | TW | 202122603 | A | |
| JP | 2009-68055 | A | 02 April 2009 | (Family: none) | | | |
| WO | 2016/125783 | A1 | 11 August 2016 | US | 2018/0022927 | A1 | |
| | | | | entire text | | | |
| | | | | EP | 3255177 | A1 | |
| | | | | CN | 107208271 | A | |
| | | | | KR | 10-2017-0107568 | A | |

Form PCT/ISA/210 (patent family annex) (January 2015)

**EP 4 417 716 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000054085 A